(19) Europäisches Patentamt

**European Patent Office**

**Office européen des brevets**

(11) Veröffentlichungsnummer: **0 289 890 B1**

(12) **EUROPÄISCHE PATENTSCHRIFT**

(45) Veröffentlichungstag der Patentschrift: **02.12.92**

(21) Anmeldenummer: **88106537.9**

(22) Anmeldetag: **23.04.88**

(51) Int. Cl.⁵: **F16B 2/06**, B60R 11/00

(54) **Klemmvorrichtung zur Verbindung eines daran befestigten Bauteils mit einem Blechteil.**

(30) Priorität: **02.05.87 DE 3714701**

(43) Veröffentlichungstag der Anmeldung:
**09.11.88 Patentblatt 88/45**

(45) Bekanntmachung des Hinweises auf die
Patenterteilung:
**02.12.92 Patentblatt 92/49**

(84) Benannte Vertragsstaaten:
**DE ES FR GB IT**

(56) Entgegenhaltungen:
**WO-A-84/01984**      **AT-B- 291 685**
**DE-U- 1 840 713**      **FR-A- 1 428 586**
**FR-A- 2 205 123**      **FR-A- 2 437 521**

(73) Patentinhaber: **AUDI AG**
**Auto-Union-Strasse 1 Postfach 220**
**W-8070 Ingolstadt(DE)**

(72) Erfinder: **Naumann, Fritz, Dr.**
**Jahnstrasse 20**
**W-8071 Stammham(DE)**
Erfinder: **Haldenwanger, Hans-Guenther**
**Behaimstrasse 16a**
**W-8070 Ingolstadt(DE)**
Erfinder: **Seufert, Martin**
**Bucherstrasse 15a**
**W-8079 Kipfenberg(DE)**

(74) Vertreter: **Engelhardt, Harald**
**AUDI AG Patentabteilung Postfach 220**
**W-8070 Ingolstadt(DE)**

**Beschreibung**

Die Erfindung betrifft eine Befestigungsanordnung mit einer Klemmvorrichtung, einem daran befestigten Bauteil und einem Blechteil, insbesondere mit einem Blechteil mit abgewinkeltem Flansch, gemäß dem Oberbegriff des Anspruchs 1.

Im Fahrzeugbau besteht häufig das Erfordernis, Bauteile mit Blechteilen zu verbinden, beispielsweise einen Wasserbehälter für eine Scheibenwaschanlage im Motorraum zu befestigen. Solche Befestigungen werden meist so durchgeführt, daß das feste Blechteil mit einer Bohrung versehen ist, und das Bauteil mit einer Blechschraube oder durchgehenden Verschraubung angeschraubt wird.

Bei dieser Befestigungsart ergeben sich eine Reihe von Nachteilen: Der Arbeitsaufwand für das Einbringen der Löcher im Blech ist groß und die Verschraubungen führen zu den bekannten Korrosionsproblemen. Bei Verwendung verzinkter Bleche ist die Verzinkung im Bereich der Bohrungen nachteilig unterbrochen.

Personenkraftwagen werden in einer Vielzahl unterschiedlicher Ausstattungen und Aufrüststufen angeboten, wodurch es notwendig ist, bei der Endmontage unterschiedliche Bauteile wahlweise mit festen Blechteilen, beispielsweise im Motorraum, zu verbinden. Um hier allen Ausstattungen von vorneherein gerecht zu werden, ist es für die vorbeschriebene Schraubbefestigung erforderlich, eine Vielzahl von Löchern im Blech von vornherein vorzusehen oder erst bei der Endmontage zu bohren. Beides ist aus den Gründen erhöhter Korrosionsgefahr und wegen des erheblichen Arbeitsaufwandes ungünstig. Die gleichen Probleme treten bei einem späteren und nachträglichen Einbau von zusätzlichen Bauteilen auf.

Als Befestigungsmittel zwischen einem flächigen Bauteil, hier einem Blechteil, und einem Anbauteil sind Klemmen bekannt, bei deren Verwendung keine Bohrung in das flächige Bauteil eingebracht werden muß. Herkömmliche Klemmen bestehen aus einem U-förmigen Klemmenkörper, wobei in den offenen U-Bereich das eine flächige Bauteil eingeführt wird und sich an der Innenseite eines U-Schenkels abstützt. Im anderen U-Schenkel ist eine Gewindebohrung in Richtung auf den ersten U-Schenkel angebracht, in der eine Klemmschraube gehalten ist. Meist trägt die Klemmschraube an ihrer Vorderseite ein drehbar gelagertes Klemmstück, das beim Festziehen der Klemmschraube auf dem flächigen Bauteil aufliegt. Solche bekannten Klemmen erfordern relativ viel Platz und eine gute Zugänglichkeit zu beiden Seiten eines Blechteils, die im Fahrzeugbau, gerade im Motorraum, meist nicht gegeben ist.

Eine weiter bekannte Klemme (DE-U-1 840 713) dient zur Befestigung einer Öse an einem Winkeleisen. Auch diese Klemme besteht aus einem U-förmigen Klemmenkörper, in dessen U-förmig offenen Bereich ein Winkel des Winkeleisens eingesteckt ist. Der Winkelschenkel liegt einerseits an der Innenseite eines U-Schenkels und andererseits an einem beweglich gehaltenen Klemmstück an, das mit einer Klemmschraube auf das Winkeleisen zu verspannt werden kann. Das Klemmstück enthält zudem einen nasenförmigen Steg, der die Außenkante des Winkeleisens umfaßt. Dadurch ist auch bei einem Nachlassen der Klemmwirkung die Klemme durch Formschluß am Abfallen vom Winkeleisen gehindert.

Zur Anbringung an größerflächigen Blechteilen ist diese bekannte Klemme nicht geeignet, da nur eine bestimmte Einführbreite in den U-förmigen Bereich vorliegt, dem dann eine Kante folgen muß, die zwar bei Winkeleisen vorliegt, jedoch nicht bei größeren Blechstücken, wie sie im Fahrzeugbau verwendet werden.

Aufgabe der Erfindung ist es, eine Befestigungsanordnung mit einer Klemmvorrichtung, einem daran befestigten Bauteil und einem Blechteil, insbesondere mit einem Blechteil mit angewinkelten Flansch, zu schaffen, mit der eine feste Verbindung bei einfacher Montage ohne Bohrung im Blechteil möglich ist.

Diese Aufgabe wird mit den Merkmalen des Anspruchs 1 gelöst.

Gemäß Anspruch 1 umfaßt die Klemmvorrichtung in einer Befestigungsanordnung einen Klemmenkörper, ein Klemmstück und einen darauf wirkenden Druckstift, der sich am Klemmenkörper gegenüber einer Anlagefläche für das Blechteil abstützt. Erfindungsgemäß steht der Druckstift bzw. die Bohrung zur Halterung des Druckstifts in einem Winkel kleiner als 90°, bevorzugt etwa 45°, zu der Anlagefläche für das Blechteil. Das Klemmstück ist über einen Steg mit dem Klemmenkörper verbunden, so daß es unverlierbar und verdrehsicher gehalten ist. Durch die Verdrehsicherung wird das Klemmstück ohne Verdrehung und Reibung nur flächig auf dem Blechteil beim Klemmvorgang zur Anlage gebracht, so daß die Oberfläche des Blechteils nicht verletzt wird. Das Klemmstück liegt erfindungsgemäß vor dem Rand oder dem abgewinkelten Flansch des Blechteils. Durch die Schrägstellung des Druckstifts wird dadurch eine Druckkomponente in Richtung des Blechteils und eine Druckkomponente senkrecht dazu auf das Klemmstück und über dieses auf das Blechteil ausgeübt und zwar unmittelbar am Randbereich.

Je nach Ausführung und Gestaltung des Klemmstücks kann die Klemmwirkung variiert werden. Wegen der Schrägstellung des Druckstifts erfordert die Klemmvorrichtung nur einen geringen Platzbedarf und kann auch an schwer zugänglichen Stellen gut montiert werden.

Insgesamt ergibt sich dadurch die Möglichkeit im Fahrzeugbau, beispielsweise im Motorraum, wahlweise und auch nachträglich eine unterschiedliche Anzahl von Anbauteilen je nach gewünschtem Aufrüstungsgrad einfach anzubringen, ohne daß die festen Blechteile mit einer Vielzahl von Bohrungen versehen werden müssen.

Nach Anspruch 2 ist es zweckmäßig, am Klemmstück eine zum Druckstift senkrecht stehende Anlagefläche vorzusehen, wodurch der Druckstift in seiner Längsrichtung auf das Klemmstück gepreßt wird. In einer anderen Ausführungsform könnte jedoch der Druckstift auch am Klemmstück vorbeigeführt werden und ggf. durch eine kegelige Ausbildung eine Druck in radialer Richtung ausüben.

Mit Anspruch 3 wird eine Ausführungsform einer Klemmvorrichtung vorgeschlagen, bei der am Klemmenkörper eine Halteeinrichtung, nach Anspruch 4 bevorzugt ein nach unten offener Schlitz, vorgesehen ist. Diese Halteeinrichtung liegt etwa gegenüber dem eingeklemmten Blechteil und wird auf ein weiteres, festes Blechteil aufgesteckt. Dadurch wird ein weiterer Abstützpunkt erhalten, der ggf. Kräfte, die sich durch die Schrägstellung des Druckstifts ergeben, abstützen und aufnehmen kann. Bei dieser Ausführung wird mit der Klemmvorrichtung einerseits das erste Blechteil eingeklemmt und andererseits die Klemmvorrichtung gegen die beiden festen Blechteile zusätzlich verspannt. Bei dieser bevorzugten Ausführungsform wird ersichtlich eine sehr feste Verbindung geschaffen.

Die Ausführungsform eines Klemmstücks nach Anspruch 5 ist für eine Verbindung mit einem Blechteil mit abgewinkeltem Flansch geeignet und weist dazu eine obere und seitliche Anlagefläche auf. Beide Anlageflächen werden beim Einbringen und Anziehen des Druckstifts gegen das Blechteil bzw. den Flansch geführt. Wenn zusätzlich das Klemmstück an einem langen seitlichen Steg gemäß Anspruch 6 verbunden ist, wird der Anlenkungspunkt für den Steg praktisch nicht belastet.

In einer anderen Ausführungsform gemäß Anspruch 7 ist das Klemmstück hammerkopfartig ausgeführt und untergreift das Blechteil bzw. einen Flansch von unten her. Durch Anbringen eines weiteren Bundes nach Anspruch 8 kann das Klemmstück auch so ausgeführt werden, daß es einen Flansch hintergreift. Mit Anspruch 9 wird weiter vorgeschlagen, daß der Steg zur Halterung des Klemmstücks als stirnseitige Anlage an das Blechteil bzw. den Flansch dient. Je nach geometrischer Ausführung wird somit das Blechteil seitlich, von unten her oder hintergreifend gehalten.

Eine weitere bevorzugte Ausführung ergibt sich mit den Merkmalen des Anspruchs 10, wobei oberhalb der Hammerkopfausbildung des Klemmstücks eine Materialverdünnung vorgesehen ist, so daß um diese Stelle das hammerkopfartige Klemmstück beim Einbringen und Anziehen des Druckstifts verschwenkbar ist. Dadurch erfolgt eine Bewegungsumkehr, so daß die schräg nach unten weisende Druckrichtung des Druckstifts nach oben umgekehrt wird und das Klemmstück mit einer Klemmrichtung nach schräg oben gedrängt wird. Bei einer solchen Ausführung kann es notwendig werden, die weitere Anlage- und Abstützfläche für das Blechteil nicht an der Unterseite, sondern oberen Seite, das heißt an der Seite des Druckstifts, vorzusehen.

Vorteilhaft wird nach Anspruch 11 der Klemmenkörper sowie das Klemmstück und der Steg einstückig aus Kunststoff hergestellt. Dadurch ergibt sich ein preiswertes, einfach herstellbares Bauteil mit vorteilhaften, elastischen Eigenschaften und elastischen Anlageflächen, die weder Blechteile noch Anbauteile beschädigen oder verkratzen.

Als Druckstift kann nach Anspruch 12 eine Schraube, ein Kegelstift oder ein Tannenbaumstift mit den entsprechenden Profilen im Klemmenkörper verwendet werden. Besonders Stifte zum Einschlagen, wie der Tannenbaumstift, führen zu einer festen Verbindung bei nur geringem Montageaufwand.

Anhand von Zeichungen werden Ausführungsbeispiele der Erfindung mit weiteren Merkmalen, Einzelheiten und Vorteilen näher erläutert.

Es zeigen

Fig. 1        einen Schnitt durch eine erste Ausführungsform einer Klemmvorrichtung,

Fig. 2        einen Schnitt durch eine zweite Ausführungsform einer Klemmvorrichtung,

Fig. 3        einen Ausschnitt aus der Klemmvorrichtung nach Fig. 1 im Bereich eines Klemmstücks,

Fig. 4        einen entsprechenden Ausschnitt aus der Ausführungsform nach Fig. 2,

Fig. 5 und 6    ein Klemmstück mit einem einen Flansch hintergreifenden Bund.

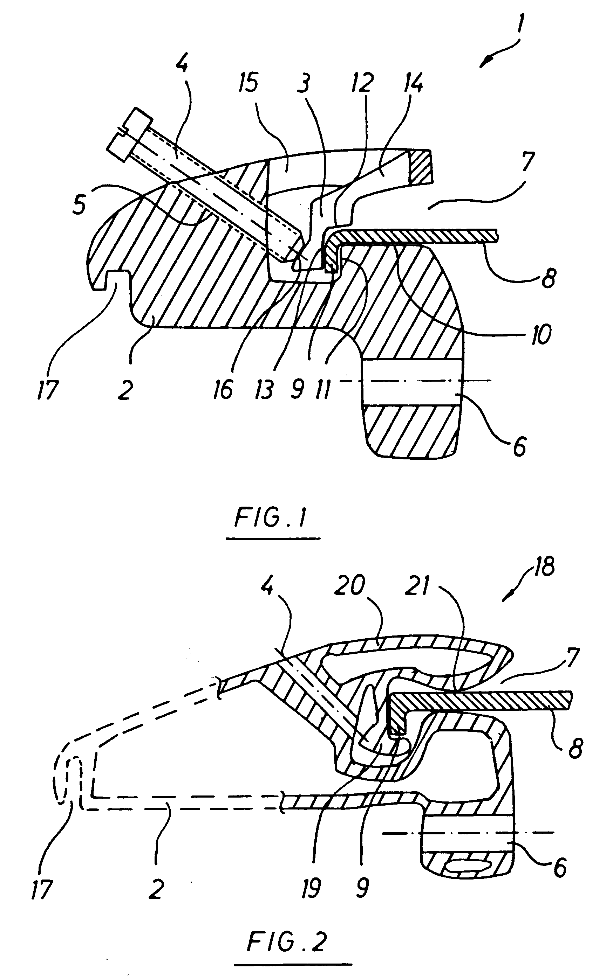

In Fig. 1 ist eine Klemmvorrichtung 1 dargestellt mit einem Klemmenkörper 2, einem Klemmstück 3 und einem als Schraube 4 ausgebildeten Druckstift in einer Gewindebohrung 5 im Klemmenkörper 2. Am Klemmenkörper 2 ist über eine Bohrung 6 ein (nicht dargestelltes) Anbauteil befestigt.

Der Klemmenkörper 2 hat eine einseitige Öffnung 7 zum Einführen eines festen Blechteils 8 mit einem abgewinkelten Flansch 9.

Die Unterseite des Blechteils 8 stützt sich auf einer horizontalen Anlagefläche 10 sowie einer vertikalen Anlagefläche 11 für den Flansch 9 ab. Am Klemmstück 3 sind entsprechende Anlageflächen 12 und 13 vorgesehen. Das Klemmstück 3 ist über einen relativ langen Steg 14 mit einem Bügel 15 am Klemmenkörper 2 verbunden. Der ganze Klemmenkörper 2 sowie der Steg 14 und das Klemmstück 3 sind einstückig aus Kunststoff gefertigt, so daß das Klemmenstück 3 beweglich über den Steg 14 gehalten ist.

Die Klemmschraube 4 steht in einem etwa 45°-Winkel in Richtung auf den vorderen Rand bzw. Flansch 9 des Blechteils 8, wobei das Klemmstück 3 mit einer zur Klemmschraube 4 senkrechten Anlagefläche 16 zwischen der Schraubenspitze und dem Flansch 9 liegt. Gegenüber der Öffnung 7 bzw. des eingesteckten Blechteils 8 ist eine als nach unten offener Schlitz 17 ausgebildete Halteeinrichtung vorgesehen zum Einstecken auf ein weiteres, festes (nicht dargestelltes) Blechteil.

Die beschriebene Klemmvorrichtung 1 hat folgende Funktion:

Das Blechteil 8 mit dem Flansch 9 ist beispielsweise ein festes, im Motorbereich eines Fahrzeugs angebrachtes Halteblech. Ein mit der Klemmvorrichtung 1 verbundenes Anbauteil, beispielsweise ein Wasserbehälter einer Scheibenwaschanlage, wird an das Blechteil 8 herangeführt und bei noch gelöster Klemmschraube 4 über die Öffnung 7 auf das Blechteil 8 geschoben. Dabei weicht wegen der elastischen Anbindung das Klemmstück 3 nach hinten oben aus. Zugleich wird ggf. der Klemmkörper 2 zusätzlich mit dem Schlitz 17 in ein weiteres, festes Blechteil eingerastet.

Zur Herstellung einer festen Verbindung wird nunmehr die Klemmschraube 4 angezogen und dadurch das Klemmstück 3 in Richtung auf das Blechteil 8 bzw. den Flansch 9 bewegt. Wegen der Schrägstellung der Klemmschraube 4 wird ein Druck schräg seitlich nach unten ausgeübt, wodurch die beiden Anlageflächen 12 und 13 unter Druck auf die Oberseite des Blechteils 8 bzw. die Außenseite des Flansches 9 gepreßt werden. Dadurch ergibt sich eine feste Verbindung, wobei die Kraft über die Anlagefläche 10, das Blechteil 8 bzw. den Flansch 9, das Klemmstück 3 und die Verschraubung 4 verläuft. Der Bügel 15 bzw. der Steg 14 sind dabei praktisch kraftfrei und brauchen somit nur relativ schwach dimensioniert sein. Bei einer Klemme mit einem U-förmigen Klemmenkörper nach dem Stand der Technik ist der Kraftverlauf dagegen über dem ganzen U-Bereich, so daß dort die Kräfte ungünstig über die gesamte U-Ausbildung geleitet werden und diese somit relativ stark dimensioniert sein muß.

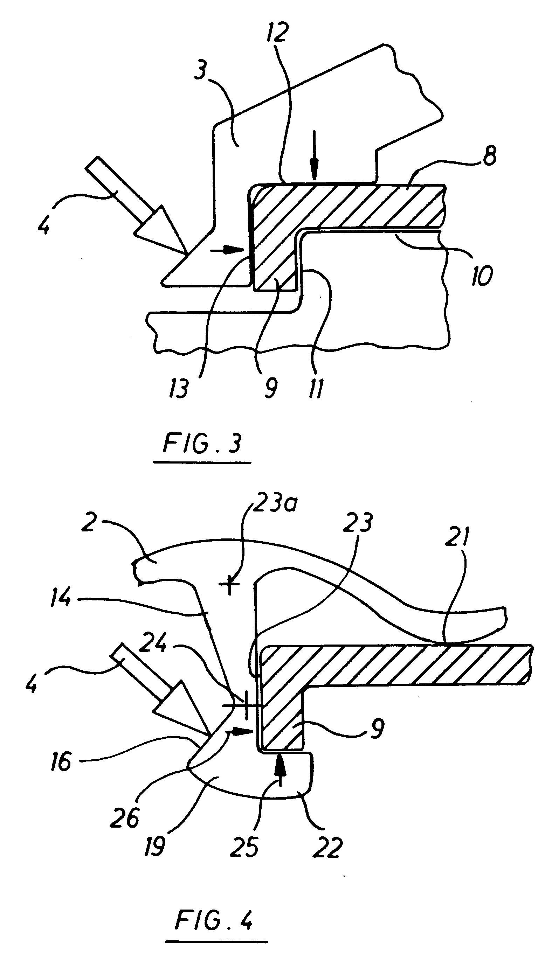

Der Druckverlauf beim Anziehen der Klemmschraube 4 am Klemmstück 3 ist im einzelnen in Fig. 3 genauer dargestellt.

Eine weitere Ausführung einer Klemmvorrichtung 18 ist in Fig. 2 dargestellt. Gleiche und gleichwirkende Teile sind mit gleichen Bezugszeichen wie in Fig. 1 versehen. Es ist auch hier ein Klemmenkörper 2 vorgesehen mit einer Öffnung 7 zum Einführen eines Blechteils 8 und einer Klemmschraube 4, die auf ein jedoch anders ausgebildetes Klemmstück 19 drückt.

Weiter ist ein stärker dimensionierter, oberer Klemmkörperteil 20 vorgesehen, mit einem Anlagebereich 21 für die Oberseite des Blechteils 8.

Der wesentliche Bereich um das Klemmstück 19 ist in Fig. 4 vergrößert dargestellt. Daraus ist zu erkennen, daß das Klemmstück 19 etwa hammerartig ausgeführt ist, wiederum mit einer Anlagefläche 16 für die Klemmschraube 4 und mit einem Bereich 22, der den Flansch 9 von unten her untergreift und dort anliegt. Der Verbindungssteg 14 ist relativ kurz und steht im wesentlichen vertikal mit einer Anlagefläche 23 für die Stirnseite des Flansches 9. Eine erste Drehachse für das Klemmstück 19 bzw. den Steg 14 liegt mit einem langen Hebelarm an der Verbindungsstelle zum Klemmenkörper 2 (dargestellt durch das Kreuz 23a). Eine weitere Schwenkachse (Kreuz 24) ergibt sich durch eine Materialverdünnung des Stegs 14 in diesem Bereich.

Diese Ausführungsform hat folgende Funktion: Das Blechteil und das Anbauteil wird über die Klemmvorrichtung, wie im Zusammenhang mit der ersten Ausführung beschrieben, vorläufig verbunden. Anschließend wird die Klemmschraube 4 angezogen und dabei das Klemmstück 19 und die Anlagefläche 23 auf den Flansch 9 zubewegt. Wegen der Schwenkachse 24 wird der Kraftwirkung der Klemmschraube 4 teilweise nach oben (Pfeil 25) umgelenkt, so daß eine Klemmwirkung gegen den Anlagebereich 21 hergestellt wird. Eine weitere Klemmwirkung erfolgt in Richtung des Pfeiles 26 auf das Blechteil 8 bzw. die Stirnseite des Flansches 9 zu.

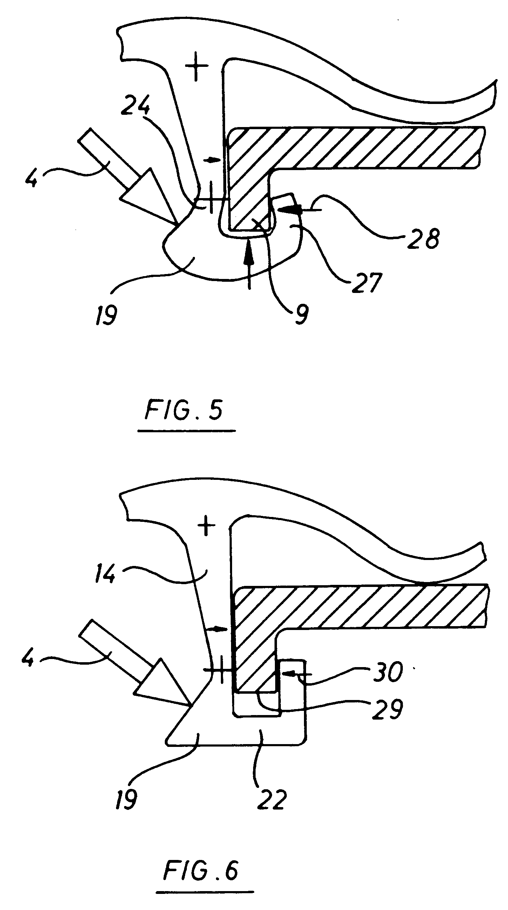

Eine weitere Ausgestaltung der Ausführungsform nach den Fig. 2 und 4 ergibt sich gemäß Fig. 5 dadurch, daß am Klemmstück 19 ein Bund 27 vorgesehen ist, der den Flansch 9 zusätzlich von hinten her umgreift. Wegen der Schwenkachse 24 wird somit eine Kraft- und Klemmwirkung von hinten her auf den Flansch 9 entsprechend dem Pfeil 28 zusätzlich ausgeübt. Dadurch wird der Flansch insgesamt gehalten und eine gute Klemmwirkung erzielt.

Bei einer weiteren Ausführung gemäß Fig. 6 liegt der untere Bereich 22 des Klemmstücks 19 nicht am Flanschrand 29 an, so daß nur eine Klemmwirkung auf den Flansch entsprechend der Pfeile 30 erfolgt. Aufgrund der gezeigten Ausführungsbeispiele ist festzustellen, daß durch geringe geometrische Änderungen der Anstellwinkel der Anlageflächen sowie der Lage und Art von Materialverdünnungen an den Stegen 14 unterschiedliche Klemmwirkungen erhalten werden, die an bestimmte Gegebenheiten dadurch angepaßt werden können. Somit ist die erfindungsgemäße Klemmvorrichtung als einfaches Bauteil für eine Vielzahl von anwendungsfällen geeignet und durch entsprechende Dimensionierung anpaßbar.

**Patentansprüche**

1. Befestigungsanordnung mit einer Klemmvorrichtung, einem daran befestigten Bauteil und einem Blechteil, insbesondere mit einem Blechteil mit abgewinkeltem Flansch,
   mit einem Klemmenkörper mit einer Öffnung zum Einführen des Blechteils,
   mit einer Anlagefläche für das Blechteil im Klemmenkörper,
   mit einem in Richtung auf die Anlagefläche beweglichen Klemmstück und
   mit einem auf das Klemmstück wirkenden Druckstift, der in einer Bohrung im Klemmenkörper gehalten ist,
   dadurch gekennzeichnet,
   daß der Druckstift (4) bzw. die Bohrung (5) in einem Winkel kleiner als 90°, bevorzugt 45°, zu der Anlagefläche (10; 21), bzw. der Fläche des Blechteils (8) steht,
   daß das Klemmstück (3; 19) über einen Steg (14) mit dem Klemmkörper (2) verbunden ist,
   daß das Klemmstück (3; 19) vor dem Rand bzw. dem abgewinkelten Flansch (9) des Blechteils (8) liegt und durch die Schrägstellung des Druckstifts (4) eine Druckkomponente in Richtung der Fläche des Blechteils (8) und eine Druckkomponente senkrecht dazu auf das Klemmstück (3; 19) und über dieses auf das Blechteil (8) bzw. den Flansch (9) ausgeübt wird.

2. Befestigungsanordnung nach Anspruch 1, dadurch gekennzeichnet, daß das Klemmstück (3; 19) für den Druckstift (4) eine zu diesem senkrecht stehende Auflagefläche (16) hat.

3. Befestigungsanordnung nach Anspruch 1 oder 2, dadurch gekennzeichnet, daß am Klemmenkörper (2) eine der Einführöffnung (7) für das Blechteil (8) gegenüberliegende Halteeinrichtung (17) vorgesehen ist zur Halterung dieses Klemmkörperbereichs an einem weiteren festen Bauteil bzw. Blechteil.

4. Befestigungsanordnung nach Anspruch 3, dadurch gekennzeichnet, daß die Halteeinrichtung ein nach unten offener Schlitz (17) ist.

5. Befestigungsanordnung nach einem der Ansprüche 1 bis 4, dadurch gekennzeichnet, daß das Klemmstück (3) eine in Richtung auf den abgewinkelten Flansch (9) des Blechteils (8) weisende Anlagefläche (13) und eine dazu etwa in diesem Winkel stehende, zweite, von oben her auf das Blechteil (8) weisende Anlagefläche (12) aufweist und beide Anlageflächen (12, 13) beim Einbringen des Druckstifts (4) gegen das Blechteil (8) bzw. den Flansch (9) geführt werden.

6. Befestigungsanordnung nach Anspruch 5, dadurch gekennzeichnet, daß der mit dem Klemmstück (3) verbundene Steg (14) als langer, seitlich vom Klemmstück (3) abstehender, Hebelarm ausgeführt ist.

7. Befestigungsanordnung nach einem der Ansprüche 1 bis 4, dadurch gekennzeichnet, daß das Klemmstück (19) hammerkopfartig ausgeführt ist und das Blechteil (8) oder den Flansch (9) von unten her untergreift.

8. Befestigungsanordnung nach Anspruch 7, dadurch gekennzeichnet, daß das Klemmstück (19) weiter einen Bund (27) aufweist, der den Flansch (9) hintergreift.

9. Befestigungsanordnung nach Anspruch 7 oder 8, dadurch gekennzeichnet, daß der Steg (14) relativ kurz ist und als stirnseitige Anlage an das Blechteil (8) bzw. den Flansch (9) dient.

10. Befestigungsanordnung nach einem der Ansprüche 7 bis 9, dadurch gekennzeichnet, daß am Steg (14) oberhalb der Hammerkopfausbildung des Klemmstücks (19) eine Materialverdünnung liegt, so daß um diese Stelle (24) das Klemmstück (19) bei Einbringen des Druckstifts (4) verschwenkbar ist.

11. Befestigungsanordnung nach einem der Ansprüche 1 bis 10, dadurch gekennzeichnet, daß der Klemmenkörper (2) sowie das Klemmstück (3; 19) und der Steg (14) einstückig aus Kunststoff hergestellt sind.

12. Befestigungsanordnung nach einem der Ansprüche 1 bis 11, dadurch gekennzeichnet, daß der Druckstift als Schraube (4) oder Kegelstift oder Tannenbaumstift mit den entsprechenden Profilen in der Bohrung ausgeführt ist.

**Claims**

1. Fastening arrangement with a clamping device, a component fastened thereto, and a sheet metal part, especially a sheet metal part with bent-over flange,

with a clamp body having an opening for introduction of the sheet metal part,

with an abutment surface for the sheet metal part in the clamp body,

with a clamping piece movable in the direction towards the abutment surface, and

with a pressure pin which acts on the clamping piece and which is held in a bore in the clamp body,

characterised in that

the pressure pin (4) and bore (5) are situated at at angle less than 90°, preferably 45°, relatively to the abutment surface (10; 21) or the surface of the sheet metal part (8),

that the clamping piece (3; 19) is connected via a bridge (14) to the clamp body (2),

that the clamping piece (3; 19) is situated before the edge or the bent-over flange (9) of the sheet metal part (8), and due to the inclined setting of the pressure pin (4) a pressure component is exerted in the direction of the surface of the sheet metal part (8) and a pressure component is exerted perpendicularly thereto towards the clamping piece (3, 19) and through the latter on to the sheet metal part (8) and the flange (9).

2. Fastening arrangement according to claim 1, characterised in that the clamping piece (3; 19) for the pressure pin (4) has an abutment surface (16) which is situated perpendicularly thereto.

3. Fastening arrangement according to claim 1 or 2, characterised in that there is provided on the clamp body (2) a holding device (17), situated opposite from the introduction opening (7) for the sheet metal part (8), for holding this clamp body region on a further fixed component or sheet metal part.

4. Fastening arrangement according to claim 3, characterised in that the holding device is a downwardly open slot (17).

5. Fastening arrangement according to one of claims 1 to 4, characterised in that the clamping piece (3) has an abutment surface (13) which faces towards the angled-over flange (9) of the sheet metal part (8), and a second abutment surface (12) which is situated substantially at this angle thereto and which faces from above towards the sheet metal part (8), and the two abutment surfaces (12, 13) are brought against the sheet metal part (8) and flange (9) when the pressure pin (4) is introduced.

6. Fastening arrangement according to claim 5, characterised in that the bridge (14) connected to the clamping piece (3) is constructed as a long lever arm projecting laterally from the clamping piece (3).

7. Fastening arrangement according to one of claims 1 to 4, characterised in that the clamping piece (19) is given a hammerhead-like form, and engages under the sheet metal part (8) or the flange (9) from below.

8. Fastening arrangement according to claim 7, characterised in that the clamping piece (19) moreover has a collar (27) which engages behind the flange (9).

9. Fastening arrangement according to claim 7 or 8, characterised in that the bridge (14) is relatively short, and serves as an end-face abutment against the sheet metal part (8) or flange (9).

10. Fastening arrangement according to one of claims 7 to 9, characterised in that the material of the bridge (14) above the hammerhead portion of the clamping piece (19) is thinned, so that when the pressure pin (4) is introduced the clamping piece (19) is pivotable about this zone (24).

11. Fastening arrangement according to one of claims 1 to 10, characterised in that the clamp body (2) and also the clamping piece (3; 19) and the bridge (14) are made in one piece from synthetic plastic material.

12. Fastening arrangement according to one of claims 1 to 11, characterised in that the pressure pin is constructed as a screw (4) or taper pin or pinetree pin with the corresponding profiling in the bore.

**Revendications**

1. Système de fixation comportant un dispositif de blocage, un élément de construction qui lui est lié, et un élément en tôle, en particulier un élément en tôle à bord recourbé,

un corps de serrage présentant une ouverture pour l'introduction de l'élément en tôle,

une surface d'appui pour l'élément en tôle dans le corps de serrage,

une pièce de blocage mobile en direction de la surface d'appui et

une tige de pression agissant sur la pièce de blocage et maintenue dans un perçage dans le corps de serrage,

caractérisé en ce que

la tige de pression (4) ou le perçage (5) fait un angle inférieur à 90°, de préférence 45°, par rapport à la surface d'appui (10 ; 21) ou à la surface de l'élément en tôle (8),

en ce que la pièce de blocage (3 ; 19) est reliée par l'intermédiaire d'une barrette (14) au corps de serrage (2),

en ce que la pièce de blocage (3 ; 19) est située devant la tranche ou le bord recourbé (9) de l'élément en tôle (8) et que, du fait de la position oblique de la tige de pression (4), celle-ci exerce une composante de pression en direction de la surface de l'élément en tôle (8) et une composante de pression perpendiculairement à celle-ci sur la pièce de blocage (3 ; 19) et, par l'intermédiaire de cette dernière, sur l'élément en tôle (8) ou sur le bord recourbé (9).

2. Système de fixation selon la revendication 1, caractérisé en ce que la pièce de blocage (3 ; 19) a, pour la tige de pression (4), une surface d'appui (16) située perpendiculairement à celle-ci.

3. Système de fixation selon la revendication 1 ou 2, caractérisé en ce qu'il est prévu sur le corps de serrage (2) un dispositif de maintien (17) situé à l'opposé de l'ouverture d'introduction (7) pour l'élément en tôle (8), ce dispositif étant destiné au maintien de cette zone du corps de serrage sur un autre élément de construction ou élément en tôle fixe.

4. Système de fixation selon la revendication 3, caractérisé en ce que le dispositif de maintien est une fente (17) ouverte vers le bas.

5. Système de fixation selon l'une quelconque des revendications 1 à 4, caractérisé en ce que la pièce de blocage (3) présente une surface d'appui (13) orientée en direction du bord recourbé (9) de l'élément en tôle (8) et une seconde surface d'appui (12) qui fait avec cette première surface un angle correspondant à celui du bord recourbé et qui est dirigée à partir du haut vers l'élément en tôle (8), et en ce que les deux surfaces d'appui (12 ; 13) sont amenées respectivement contre l'élément en tôle (8) et le bord recourbé (9) lorsque la tige de pression (4) est mise en place.

6. Système de fixation selon la revendication 5, caractérisé en ce que la barrette (14) liée à la pièce de blocage (3) est réalisée sous forme de bras de levier long s'écartant latéralement de la pièce de blocage (3).

7. Système de fixation selon l'une quelconque des revendications 1 à 4, caractérisé en ce que la pièce de blocage (19) est réalisée en forme de tête de marteau et en ce qu'elle vient en contact par en dessous avec l'élément en tôle (8) ou le bord recourbé (9).

8. Système de fixation selon la revendication 7, caractérisé en ce que l'élément de blocage (19) présente en outre un rebord (27) qui vient en contact par derrière avec le bord recourbé (9).

9. Système de fixation selon la revendication 7 ou 8, caractérisé en ce que la barrette (14) est relativement courte et en ce qu'elle sert d'appui frontal contre l'élément en tôle (8) ou le bord recourbé (9).

10. Système de fixation selon l'une quelconque des revendications 7 à 9, caractérisé en ce que la barette (14) présente un amincissement au-dessus de la formation en tête de marteau de la pièce de blocage (19), de telle manière que la pièce de blocage (19) peut pivoter autour de cette position (24) lors de l'introduction de la tige de pression (4).

11. Système de fixation selon l'une quelconque des revendications 1 à 10, caractérisé en ce que le corps de serrage (2) ainsi que la pièce de blocage (3 ; 19) et la barrette (14) sont fabriqués d'une seule pièce en matière plastique.

12. Système de fixation selon l'une quelconque des revendications 1 à 11, caractérisé en ce que la tige de pression est réalisée sous forme de vis (4) ou de goupille conique ou de cheville en arête de poisson avec des profils correspondants dans le perçage.

FIG.1

FIG.2

8

FIG . 3

FIG . 4

_FIG. 5_

_FIG. 6_